# EUROPEAN PATENT APPLICATION

(11) **EP 2 498 193 A2**
(43) Date of publication of application: **12.09.2012**
(21) Application number: 12150063.1
(22) Date of filing: 03.01.2012
(51) Int. Cl.: G06F 17/50

(54) **Design apparatus and design method**

(30) Priority: 09.03.2011 JP 2011051372
(71) Applicant: Fujitsu Limited, Kawasaki-shi, Kanagawa 211-8588 (JP)
(72) Inventor: Kosugi, Naofumi, Kanagawa, 211-8588 (JP)
(74) Representative: HOFFMANN EITLE

(57) **Abstract**

A design apparatus includes a first processor that determines outer dimensions of the to-be-designed apparatus on a basis of a specifications information input via an input device and the dimension rules stored by a storage. And the design apparatus further includes a second processor that determines, when one of unit candidates stored by the storage is selected as a unit to be installed in the to-be-designed apparatus in accordance with the specification information input via the input device, a placement position of the selected unit in the to-be-designed apparatus having the outer dimensions determined by the first processor on a basis of the placement rules stored by the storage and associated with a type of the selected unit.

## Description

### FIELD

The embodiment discussed herein is related to a design apparatus, a design method, and a recording medium.

### BACKGROUND

In general, during design and development of various apparatuses, on the basis of requests of an apparatus specification department, personnel in an installation structure department selects an apparatus outer shape corresponding to the type of an apparatus to be designed and units to be installed into the apparatus and determines and creates a layout by using a dedicated CAD (computer aided design) technique and studies a structure plan of the apparatus to be designed. The design and development of apparatus hardware is mainly carried out by two departments: the apparatus specification department and the installation structure department. The "apparatus specification department" refers to a department that does a "desktop" study to determine specifications of an apparatus to be designed and developed. The "installation structure department" refers to a department that performs detailed design of an actual apparatus according to requests of the apparatus specification department, i.e., the specifications of the apparatus to be designed and developed,

Server products are classified into desktop servers, floor-standing servers, and rack-mount servers. Particularly, the rack-mount servers are most commonly used with support from data center businesses because of their ease of installation. The rack-mount servers are also called "rack servers" and have shapes and sizes that are suitable for mounting in, for example, dedicated electronic-equipment-accommodating racks placed at internet data centers and so on.

The sizes (heights) of the rack servers are designated by a unit "U", The sizes of the rack servers are defined by JIS (Japanese Industrial Standards) and EIA (Electronic Industries Alliance). For example, 1U indicates that the apparatus height is 44.45 mm. A 2U server is defined to have twice the height of a 1U server and a 3U server is defined to have three times the height of a 1U server.

Rack-mounted-type apparatuses, such as rack servers, mounted in racks according to a given standard, as described above, are hereinafter referred to as "rack-mount apparatuses",

The height and width dimensions of the rack-mount apparatuses have been defined. Thus, considering various elements in connection with the defined height and width dimensions, designers in the installation structure department design the rack-mount apparatus so that it has extra room (margins).

The rack-mount apparatuses in the depth direction are basically designed so that they are fit into the racks. In practice, however, the designers in the installation structure department need to consider cooling port areas at front and back sides of each rack-mount apparatus and cable handling at the back of the rack-mount apparatus. This requires special knowledge and expertise in designing the rack-mount apparatus in the depth direction.

During the design and development of the rack-mount apparatus, the apparatus specification department studies the specifications of the rack-mount apparatus and the installation structure department performs detailed design in accordance with the apparatus specifications presented by the apparatus specification department. However, since the detailed design of the rack-mount apparatus requires special skills as described above, the feasibility of the apparatus specifications "desktop"-studied in the apparatus-specification department is low in many cases. Thus, through repetition of interaction with the installation structure department, the apparatus specification department determines the feasibility of the studied apparatus specifications and reviews the apparatus specifications many times to determine highly feasible apparatus specifications.

In particular, the detailed design of the rack-mount apparatus whose outer dimensions are defined requires experiences and feels of the designers, and thus, the layout of units in the rack-mount apparatus and the outer shape of the rack-mount apparatus vary depending upon the experiences and feels of the designers. That is, the design of the basic portions of the rack-mount apparatus is dependent on the experiences (the design skills) of the designers. Thus, when the study is proceeded using a low-accuracy model (with low-accuracy apparatus specifications), it has great impacts, such as a cost increase and design rework, during later detailed design.

While the detailed design of the rack-mount apparatus whose outer dimensions are defined requires that the designers (operators) have skills in CAD operation, the number of designers who are highly skillful is limited. The apparatus specification department, therefore, needs to wait for the limited number of designers to become available to interact with the installation structure department, thus making it difficult to timely study the apparatus specifications presented by the apparatus specification department.

Examples of related art include Japanese Laid-open Patent Publication Nos. 2005-228167, 2010-157164, and 2003-16138.

As described above, in the related art, during development, planning, and studying, the personnel in the installation structure department interact with the apparatus specification department dozens of times on the basis of installation structure expertise and special skills, such as design skills and CAD operation skills, in order to determine the feasibility of apparatus specifications studied by the apparatus specification department. Consequently, a long development period and long human work hours are taken for the apparatus specification department to create highly feasible specifications and to improve the design quality.

### SUMMARY

Accordingly, it is an object in one aspect of the embodiment to achieve reductions in the period of time and human work hours taken for developing an apparatus to be designed and an improvement in the design quality of the apparatus to be designed.

According to an aspect of the invention, an apparatus includes an input device that inputs specification information of a to-be-designed apparatus, The apparatus further includes a storage that stores, a plurality of dimension rules defining outer dimensions of the to-be-designed apparatus, a plurality of placement rules of units to be installed in the to-be-designed apparatus with respect to respective types of the units, and a plurality of unit candidates installable in the to-be-designed apparatus with respect to the types of the units. The apparatus further includes a first processor that determines the outer dimensions of the to-be-designed apparatus on a basis of the specification information input via the input device and the dimension rules stored by the storage, and a second processor that determines, when one of the unit candidates stored by the storage is selected as a unit to be installed in the to-be-designed apparatus in accordance with the specification information input via the input device, a placement position of the selected unit in the to-be-designed apparatus having the outer dimensions determined by the first processor on a basis of the placement rules stored by the storage and associated with a type of the selected unit.

### BRIEF DESCRIPTION OF DRAWINGS

FIG. 1 is a block diagram illustrating the hardware configuration and functional configuration of a design apparatus according to one embodiment;

FIG. 2 illustrates an example of an outer-shape information table (a first table);

FIG. 3 illustrates an example of a component-type table;

FIG. 4 illustrates an example of a placement-restriction table (a second table);

FIG. 5 illustrates an example of a unit-information table (a third tahle);

FIG. 6 is a flowchart illustrating a design procedure (a design method according to one embodiment) for the design apparatus illustrated in FIG. 1;

FIG. 7 is a flowchart illustrating the design procedure (the design method according to the embodiment) for the design apparatus illustrated in FIG, 1;

FIG. 8 illustrates an example of an image displayed during setting of outer dimensions;

FIG, 9 illustrates an example of an image displayed during placement of power supplies;

FIG. 10 illustrates an example of an image displayed during placement of cooling fans;

FIG. 11 illustrates an example of an image displayed during placement of I/O devices;

FIG. 12 illustrates an example of an image displayed during placement of I/O devices;

FIG. 13 illustrates an example of an image displayed during placement of a system board;

FIG. 14 illustrates an example of an image displayed during placement of I/O cards;

FIG. 15 illustrates an example of an image displayed during placement of I/O cards;

FIG. 16 illustrates an example of an image displayed during setting of a depth dimension;

FIG. 17 illustrates an example of an image displayed when setting of the depth dimension is competed;

FIG. 18 illustrates an example of an image displayed when the setting of the depth dimension is completed; and

FIGs. 19A and 19B illustrate examples of images displayed when the setting of the depth dimension is completed.

### DESCRIPTION OF EMBODIMENTS

An embodiment will be described below with reference to the accompanying drawings.

In an embodiment described below, a description will be given of an example in which an apparatus to be designed by a design apparatus is a rack-mount apparatus. That is, an apparatus to be designed (hereinafter may be referred to as a "to-be-designed apparatus") is placed in a dedicated electronic-equipment-accommodating rack according to a given standard and has a size specified by a numeric value in a height unit U defined by the given standard.

(1) Configuration of Design Apparatus

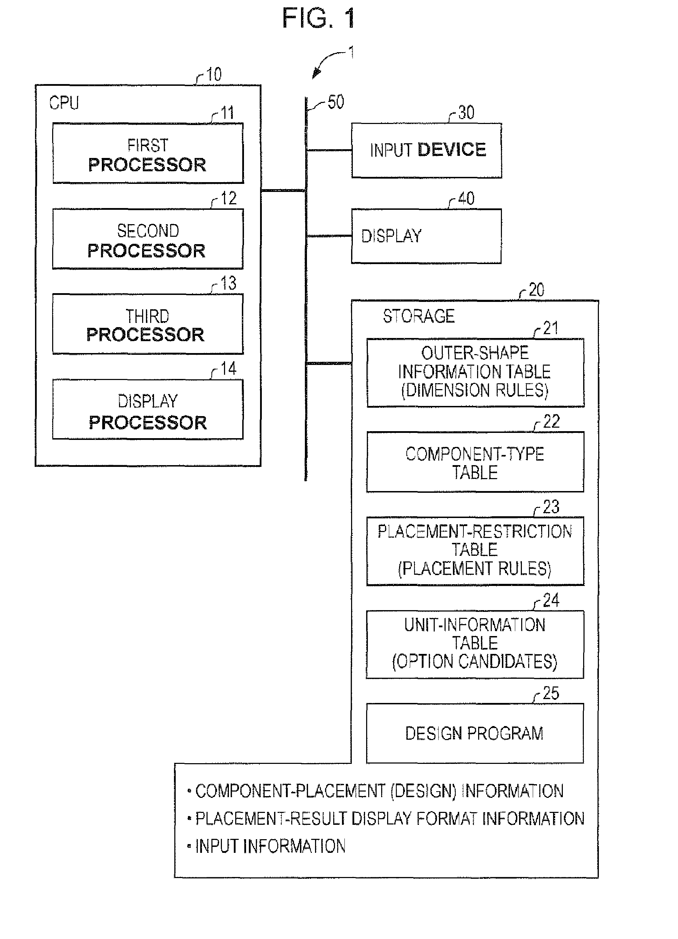

FIG. 1 is a block diagram illustrating the hardware configuration and functional configuration of a design apparatus 1 according to one embodiment.

The design apparatus 1 illustrated in FIG. 1 allows even personnel in an apparatus specification department or the like who are not skillful in CAD operation and detailed design to create an apparatus specification-and-plan of a to-be-designed apparatus, i.e., a rack-mount apparatus, by simply inputting specification information. The "apparatus specification-and-plan" as used herein refers to, for example, an image indicating the outer shape of the rack-mount apparatus desired by the apparatus specification department and the installation layout state of units to be installed in the rack-mount apparatus.

The design apparatus 1 illustrated in FIG. 1 may be implemented by a computing apparatus, such as a typical personal computer, and includes a CPU (central processing unit) 10, a storage 20, an input device 30, and a display 40. The CPU 10, the storage 20, the input device 30, and the display 40 are interconnected through a bus 50 so as to enable communication.

By executing a design program 25 stored in the storage 20, the CPU 10 achieves functions of a first processor 11, a second processor 12, a third processor 13, and a display processor 14 (which are described below).

In addition to the design program 25, the storage 20 stores an outer-shape information table 21, a component-type table 22, a placement-restriction table 23, and a unit-information table 24, as well as component placement (design) information and information input from the input device 30. The storage 20 may be an internal storage device or an external storage device. Examples of the storage 20 include a RAM (random access memory), a ROM (read only memory), a HDD (hard disk drive), and an SSD (solid state drive).

The input device 30 includes a keyboard, a mouse, and so on. A user operates the input device 30 to input various types of information to the CPU 10. In particular, in the present embodiment, the user uses the input device 30 to input specification information for creating the apparatus specification-and-plan, while referring to the display 40, For example, as the specification information in the present embodiment, information as follows is input.

U Number (Height) of Rack-Mount Apparatus

Installation or Non-Installation of Slide Rails

Type of Power Supply, Quantity of Power Supplies (Redundancy/Non-Redundancy), Estimated Power Consumption, Etc.

Size and Quantity of Cooling Fans, Etc.

Type of I/O (Input/Output) Device, such as Built-in Storage Device and Medium Driver (e.g., HDD, DVD, and CD-ROM)

Selection of Standard Card/Non-Standard Card

When Standard Card is Selected: Type and Number of Standard Cards and Active/Non-Active Replacement

When Non-Standard Card is Selected: Outer dimension of Non-Standard Card and Presence/Absence of Active Replacement

Value of Minimum Bend Radius (or Type) of Cable at Back of Rack-Mount Apparatus

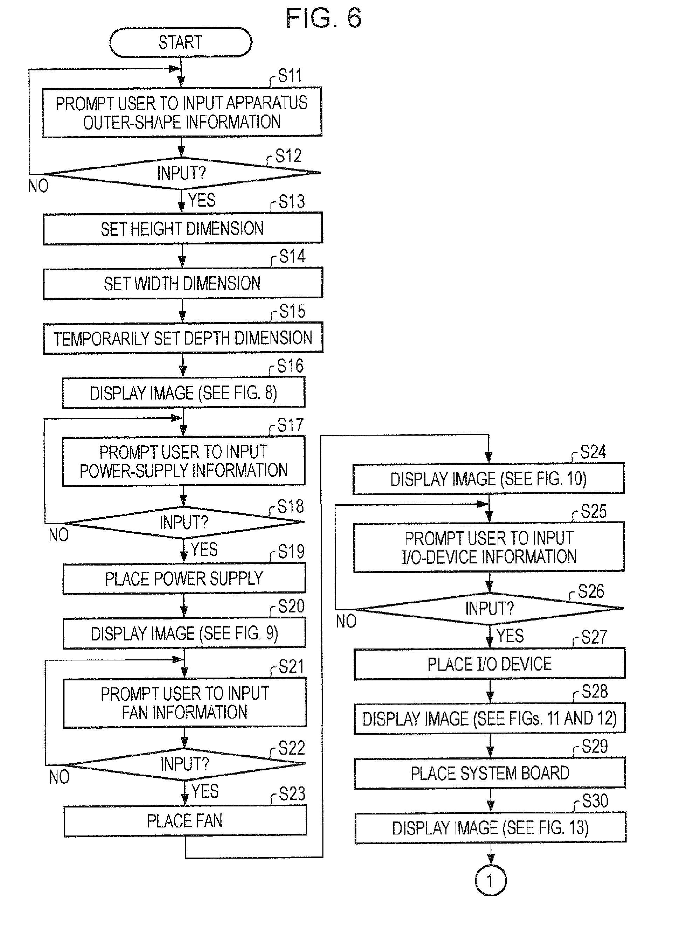

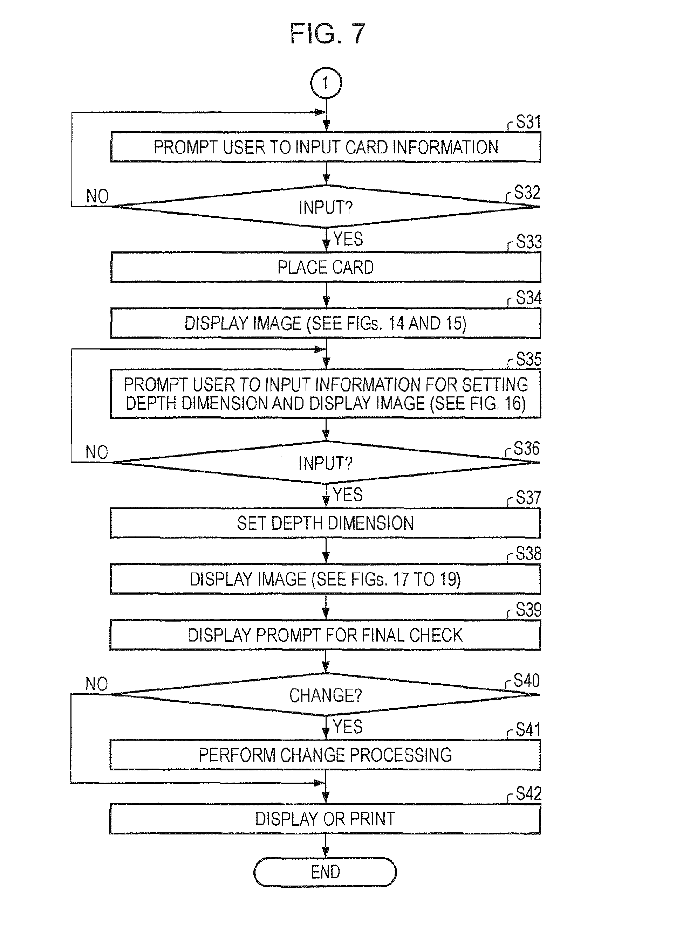

Those pieces of specification information may be collectively input by the user operating the input device 30 upon start of creating the apparatus specifications of the rack-mount apparatus or may be sequentially input in a dialog format during the process of creating the apparatus specifications of the rack-mount apparatus, as illustrated in FIGs. 6 and 7. The information input from the input device 30 is stored in a given area in the storage 20. The type of power supply, the size of the cooling fan, the type of I/O device, the type of standard card, the type of cable, and so on are selected from the unit-information table 24 (described below) in the storage 20. That is, option candidates in the unit-information table 24 are displayed on the display 40 and the user refers to the displayed option candidates thereon and operates the input device 30 to select units (components) he or she desires to install in the rack-mount apparatus. During selection of the installation or non-installation of the slide rails and the standard card/non-standard card, the user refers to the options displayed on the display 40 and operates the input device 30 to select the desired options. The user may operate a numerical keyboard or the like included in the input device 30 to input numeric values of the U number, quantities of various units, a power value, outer dimensions, and so on.

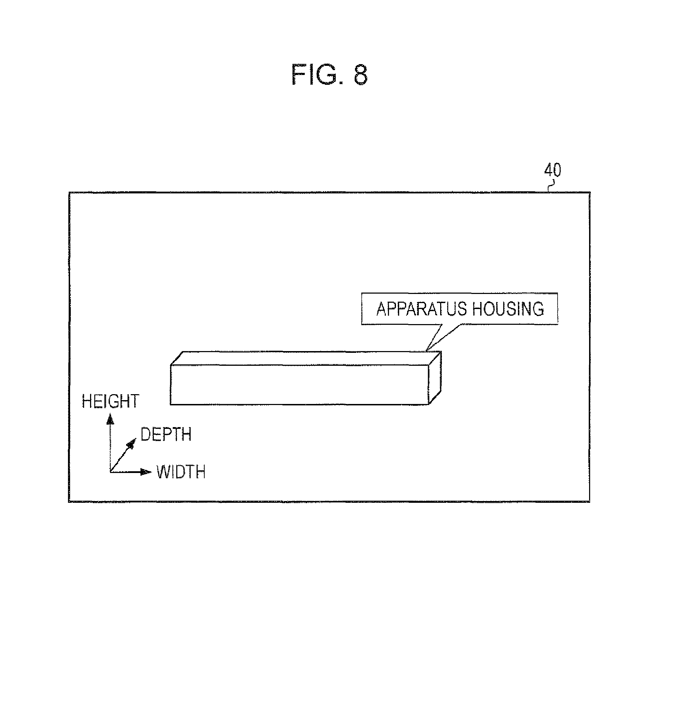

The display 40 may be implemented by a CRT (cathode ray tube), an LCD (liquid crystal display), or the like. A display state of the display 40 is controlled by the CPU 10 (particularly, the display processor 14). The display 40 displays a creation process of the apparatus specification-and-plan in the form of an image, as appropriate, and also lastly display a created apparatus specification-and-plan in the form an image (see Fig. 8 to 19). Various notifications, warnings, and so on for the user are also displayed on a screen of the display 40.

Various types of information stored in the storage 20 will now be described.

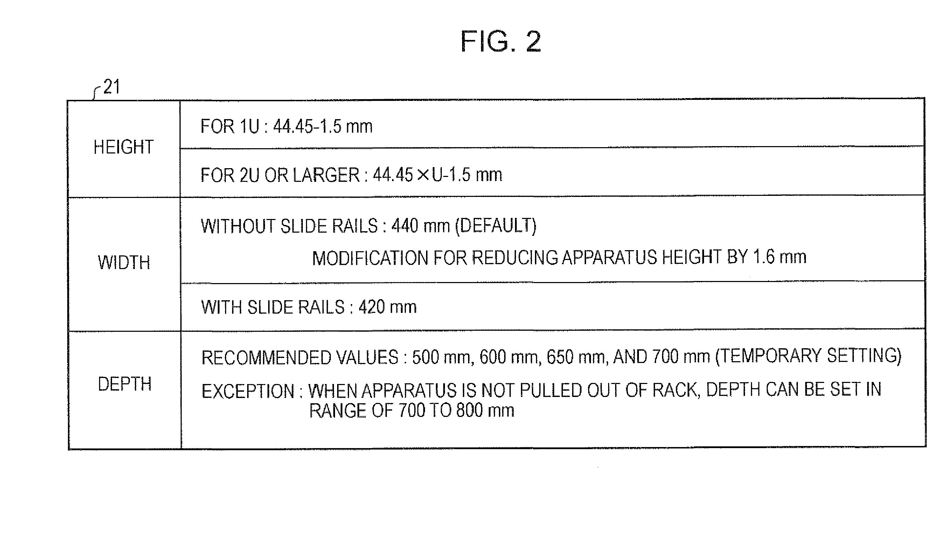

Dimension rules that define outer dimensions of the rack-mount apparatus are registered in the outer-shape information table 21. More specifically, dimension rules for determining a height dimension, a width dimension, and a depth dimension of the rack-mount apparatus are registered in the outer-shape information table 21, as illustrated in FIG. 2.

According to the dimension rules illustrated in FIG. 2, the height dimension is determined based on the U number input by the user via the input device 30. When the input U number is 1U, the height dimension of the rack-mount apparatus is determined to be 44.45 - 1.5 mm, and when the input U number is 2U or larger, the height dimension of the rack-mount apparatus is determined to be 44.45 × U - 2 mm. When the height information input via the input device 30 is a numeric value in units of mm, not the U number, the input numeric value is divided by 44.45 for conversion into a value in the unit U and the aforementioned dimension rules with respect to the height dimension are applied. The design of the height dimension is described below in detail in conjunction with a description of step S13 illustrated in FIG. 6.

According to the dimension rules illustrated in FIG. 2, the width dimension is set as described below, on the basis of designation of the installation or non-installation of the slide rails, the designation being input by the user via the input device 30 as the specification information of the rack-mount apparatus. The slide rails serve as a mechanism attached to left and right side surfaces of the rack-mount apparatus so as to allow the rack-mount apparatus to be removable mounted in a rack. In a case without the slide rails, the default width dimension of the rack-mount apparatus is set to 440 mm and modification is executed to reduce the height dimension by an amount corresponding to the thickness of the shelf plate on which the rack-mount apparatus is placed. In a case with the slide rails, the width dimension of the rack-mount apparatus is set to 420 mm, which is obtained by subtracting the widths of the left and right slide rails from the default width of 440 mm. The setting of the width dimension is described below in detail in conjunction with a description of step S14 illustrated in FIG. 6.

According to the dimension rules illustrated in FIG. 2, the depth dimension is selected from, for example, 500 mm, 600 mm, 650 mm, and 700 mm. However, during temporary setting of the depth dimension, for example, the depth dimension of 700 mm is selected, and during final determination of the depth dimension, the depth dimension is selected from, for example, 500 mm, 600 mm, 650 mm, and 700 mm. The temporary setting of the depth dimension is described in detail in conjunction with a description of step S15 in FIG. 6 and the final determination of the depth dimension is described in detail in conjunction with a description of step S37 in FIG. 7. In a case in which the rack-mount apparatus is not to be pulled out of the rack, that is, in the case without the slide rails, the depth dimension is selectable and settable in the range of 700 to 800 mm.

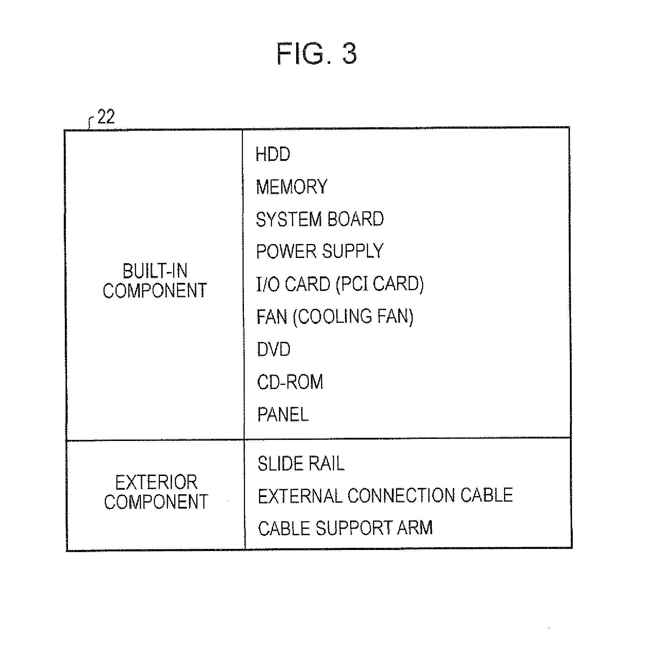

The types of units (types of components) to be installed in the rack-mount apparatus are registered in the component-type table 22 in which the component types are divided into built-in components and exterior components. More specifically, as illustrated in FIG. 3, for example, a HDD, memory, system board, power supply, I/O card (PCI (peripheral component interconnect) card), fan (cooling fan), DVD, CD-ROM, and panel are registered in the component-type table 22 as the types of built-in components of the rack-mount apparatus. As illustrated in FIG. 3, for example, a slide rail, cable, and cable support arm are registered in the component-type table 22 as the types of exterior components of the rack-mount apparatus. The component types registered in the component-type table 22 are linked to corresponding information in the placement-restriction table 23 and the unit-information table 24 (which are described below). Thus, upon selecting the component type displayed on the display 40, the user may refer to, on the display 40, the corresponding information in the placement-restriction table 23 and the unit-information table 24.

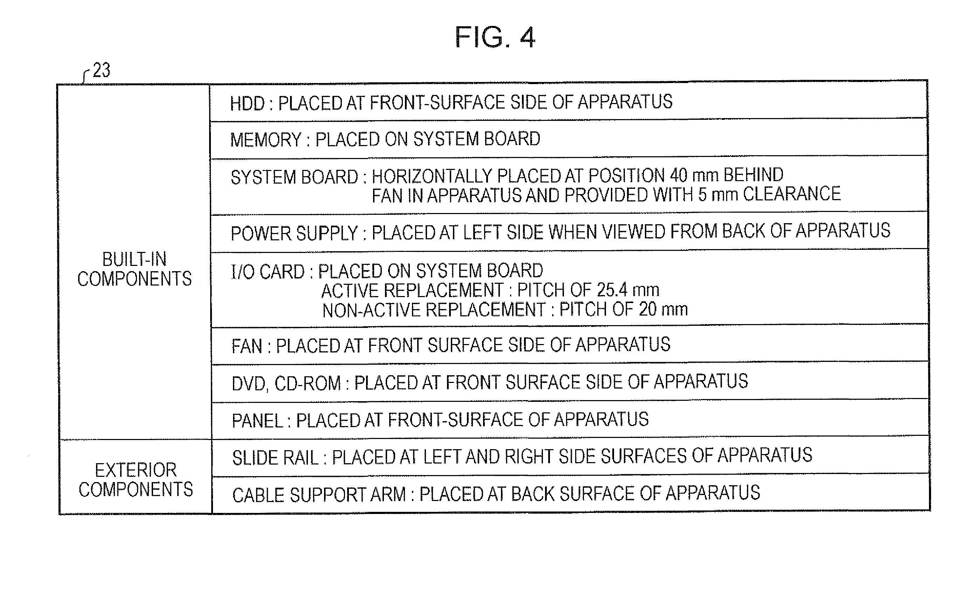

Placement rules of the units to be installed in the rack-mount apparatus are registered in the placement-restriction table 23 with respect to the respective types of units to be installed. More specifically, in the placement-restriction table 23, placement rules or placement restrictions indicating how and where the units are to be placed are registered with respect the types of units, as illustrated in FIG. 4. For example, the placement rule of the HDD defines that it is to be placed at a front surface side of the rack-mount apparatus. The placement rule of the memory defines that it is to be placed on the system board. The placement rule of the system board defines that it is to be horizontally placed at a position 40 mm behind the fan in the rack-mount apparatus and a clearance of 5 mm is to be provided at a side surface and a bottom surface of the rack-mount apparatus. The placement rule of the power supply defines that it is to be placed at the left side when viewed from the back of the rack-mount apparatus. The placement rule of the I/O card (PCI card) defines that it is to be placed on the system board, the pitch of the cards is to be set to 25.4 mm for the active replacement, and the pitch of the cards is to be set to 20 mm for the non-active replacement. For example, the placement rules of the fan, DVD, and CD-ROM define that they are to be placed at the front surface side of the rack-mount apparatus. The placement rule of the panel defines that it is to be placed at the front surface of the rack-mount apparatus. The placement rule of the slide rails defines that they are placed at the left and right side surfaces of the rack-mount apparatus and the placement rule of the cable support arm defines that it is to be placed at a back surface of the rack-mount apparatus. Although the clearance for only the system board is defined in the above-described placement rules, clearances between other units to be installed and an inner surface of an available space in the rack-mount apparatus are also defined in the placement rules, as described below.

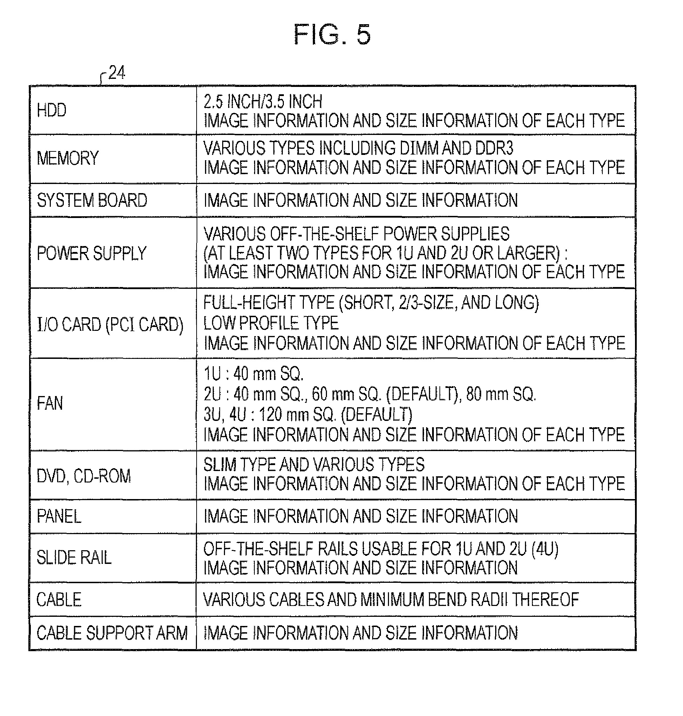

Option candidates that may be installed in the rack-mount apparatus are registered in the unit-information table 24 with respect to the respective types of units to be installed. More specifically, as illustrated in FIG. 5, at least one option candidate as well as image information and outer dimension information (size information) with respect to each option candidate are registered in the unit-information table 24 with respect to each type of unit to be installed.

For example, two types of HDD, namely, 2.5 inch HDD and 3.5 inch HDD, are registered as the option candidates of the HDD. DIMM DDR3 (double inline memory module double data rate 3) and so on are registered as the option candidates of the memory.

Various types of off-the-shelf power supply are registered as the option candidates of the power supply. At least two types of power supply, namely, a power supply for 1U and a power supply for 2U or larger, are registered as the various types of off-the-shelf power supply. A newly released power supply may also be selected as the power supply. A case in which a newly released power supply is selected is described in detail in conjunction with a description of step S19 illustrated in FIG. 6.

Two types of card, namely, a full-height card and a low-profile card (which are standard cards), are registered as the option candidates of the I/O card (PCI card). Further, three types of card, namely, short, 2/3-size, and long cards, are registered as the full-height card. A nort-standard card may also be selected as the I/O card (PCI card). A case in which a non-standard card is selected is described in detail in conjunction with a description of step S33 illustrated in FIG. 7.

As the option candidates of the fan, a 40 mm square cooling fan is registered for a 1U-height apparatus, a 40 mm square cooling fan, a 60 mm square cooling fan, and an 80 mm square cooling fan are registered for a 2U-height apparatus, and a 120 mm square cooling fan is registered for 3U-height and 4U-height apparatuses. An X mm square cooling fan is a cooling fan with a size of X mm × X mm. A slim type and other off-the-shelf types of devices are registered as the option candidates of the DVD and CD-ROM.

Slide rails that have already defined specifications and that are usable for 1U and 2U (4U) are registered as the option candidates of the slide rails.

Various cables are registered as the option candidates of the cable in conjunction with the minimum bend radii of the cables.

No particular option candidates of the system board and the cable support arm are registered in the unit-information table 24, but image information and size information therefor are registered.

The storage 20 has an area for storing placement-result display format information, component-placement (design) information, and information input via the input device 30, in addition to the above-described tables 21 to 24. The component placement (design) information is information of the apparatus specification-and-plan and is created by the first processor 11 and the second processor 12 (described below). The information input via the input device 30 is specification information input via the input device 30 as described above.

Next, a description will be given of functions of the first processor 11, the second processor 12, the third processor 13, and the display processor 14, the functions being realized by the CPU 10 executing the design program 25.

The first processor 11 determines outer dimensions of the rack-mount apparatus on the basis of the specification information input via the input device 30 and the outer-shape information table 21 (regarding the dimension rules) in the storage 20.

As described above, the numeric value of the height unit U (i.e., the U number) specifying the size of the rack-mount apparatus is input to the first processor 11 via the input device 30 as the specification information. The first processor 11 determines a height dimension of the rack-mount apparatus on the basis of the input numeric value and the dimension rules (the height dimension rules) in the outer-shape information table 21. The height-dimension determination performed by the first processor 11 is described below in detail in conjunction with a description of step S13 illustrated in FIG. 6.

The information specifying the installation or non-installation of the slide rails is input to the first processor 11 via the input device 30 as the specification information. The first processor 11 determines a width dimension of the rack-mount apparatus on the basis of the information specifying the installation or non-installation of the slide rails and the dimension rules (the width dimension rules) in the outer-shape information table 21. When the information specifies the non-installation of the slide rails, the first processor 11 modifies the height dimension of the rack-mount apparatus on the basis of the thickness of a shelf plate on which the rack-mount apparatus is placed. The width-dimension determination performed by the first processor 11 is described below in detail in conjunction with a description of step S14 illustrated in FIG. 6.

When one of the option candidates in the storage 20 is selected as a unit to be installed in the rack-mount apparatus in accordance with the specification information input via the input device 30, the second processor 12 places the unit in the rack-mount apparatus having the outer dimensions determined by the first processor 11. That is, the second processor 12 determines a placement position of the unit in the rack-mount apparatus on the basis of the placement rules stored in the placement-restriction table 23 in the storage 20 and associated with the type of the selected unit. In the present embodiment, examples of the type of the unit to be installed include a HDD, memory, system board, power supply, I/O card, fan, DVD, CD-ROM, slide rail, cable, and cable support arm, Determination of the placement positions of the various units to be installed, the determination being made by the second processor 12, is described in detail in conjunction with descriptions of steps S19, S23, S27, and S29 illustrated in FIG. 6 and step S33 illustrated in FIG. 7.

In the design apparatus 1 according to the present embodiment, the first processor 11 determines the height dimension and the width dimension of the rack-mount apparatus and temporarily sets the depth dimension of the rack-mount apparatus. The second processor 12 then determines the placement positions of the units in the order of the power supply, the fan, the HDD, the DVD (CD-ROM), the system board, the I/O card, and the cable. Thereafter, the first processor 11 lastly determines a depth dimension of the rack-mount apparatus. A more detailed design procedure for the design apparatus 1 according to the present embodiment is described below with reference to FIGs. 6 and 7.

When the second processor 12 completes the determination of the placement positions of the units in the state in which the depth dimension of the rack-mount apparatus is temporarily set, the first processor 11 determines a depth dimension of the rack-mount apparatus. In this case, the first processor 11 determines the depth dimension of the rack-mount apparatus on the basis of a minimum bend radius value of a cable at the back of the rack-mount apparatus and the outer-shape information table 21, the minimum bend radius value being input via the input device 30 as the specification information. Instead of the minimum bend radius value of the cable at the back of the rack-mount apparatus, the type of cable may be input via the input device 30 as the specification information. In this case, the first processor 11 reads, from the unit-information table 24, the minimum bend radius value corresponding to the input type of cable, and determines the depth dimension of the rack-mount apparatus on the basis of the read minimum bend radius value and the outer-shape information table 21. The final depth-dimension determination performed by the first processor 11 is described below in detail in conjunction with a description of step S37 illustrated in FIG. 7.

The third processor 13 checks correspondence between the standard of the rack-mount apparatus and the specification information input via the input device 30, the result of the outer-dimension determination performed by the first processor 11, or the result of the installation-unit placement performed by the second processor 12, as appropriate. A procedure of correspondence checking performed by the third processor 13 is described below with reference to FIGs. 6 and 7.

The display processor 14 controls a display state of the display 40.

More specifically, on the basis of the result of the outer-dimension determination performed by the first processor 11, the result of the installation-unit placement performed by the second processor 12, and the image information and the size information in the unit-information table 24, the display processor 14 creates an image indicating the outer shape of the rack-mount apparatus and the installation layout state of the unit to be installed in the rack-mount apparatus and displays the created image on the display 40. The image displayed on the display 40 is described below in detail with reference to steps S16, S20, S24, S28, and S30 in FIG. 6, S34, S35, S38, and S42 in FIG. 7, and FIGs. 8 to 19.

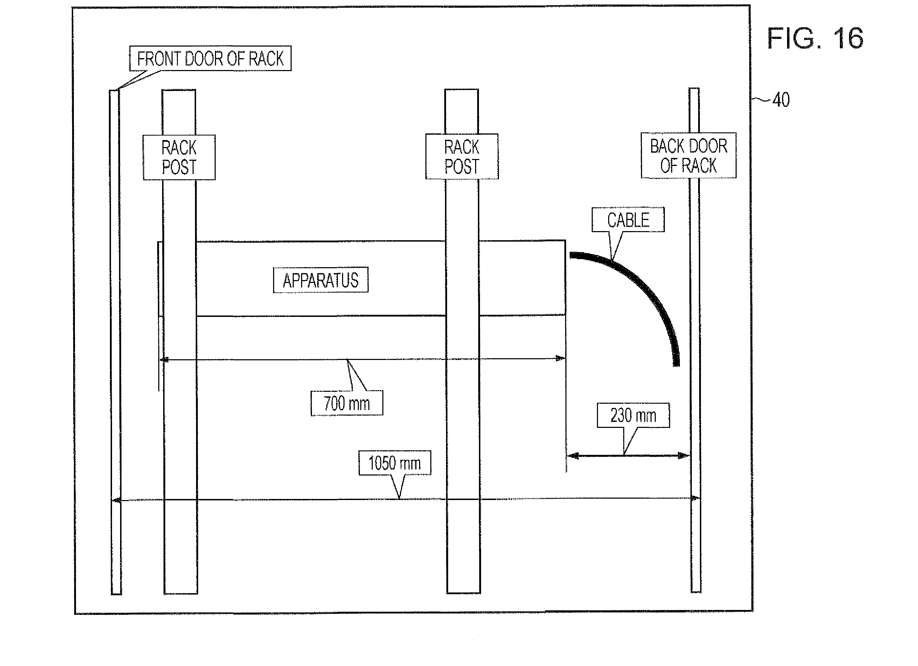

The display processor 14 also has a function for displaying, on the display 40, the distance between the back surface of the rack-mount apparatus and an inner side of a back door of the rack as a maximum dimension for accommodating a cable, before determining the depth dimension of the rack-mount apparatus. The display of the maximum dimension is described below in detail in conjunction with a description of step S35 in FIG. 7 and with reference to FIG. 16.

The display processor 14 also has a function for displaying, on the display 40, information for prompting an operator to make a final check on the result of the outer-dimension determination performed by the first processor 11 and the result of the installation-unit placement performed by the second processor 12, when the outer-dimension determination performed by the first processor 11 and the installation-unit placement performed by the second processor 12 are completed. The display of the final-check prompt is described below in detail with reference to step S39 in FIG. 7.

The display processor 14 also has a function for displaying, on the display 40, a result of the correspondence checking performed by the third processor 13. In particular, when the result of the checking performed by the third processor 13 indicates a lack of correspondence, the display processor 14 displays an incompatible portion in the image in an enhanced manner.

The second processor 12 also has a function for enabling the user to change the placement of the unit by operating the input device 30 when the result of the outer-dimension determination performed by the first processor 11 and the result of the installation-unit placement performed by the second processor 12 are displayed on the display 40. For example, when the user wishes to change the placement position of an already placed unit and, he or she may specify, on the screen of the display 40, the unit to be changed, As a result, a dimension (distance) between a given origin and the unit to be changed (e.g., the lower-left position of the unit) is displayed. This arrangement allows the user to change the placement position of the unit to an optimum position through modification while referring to the displayed dimension (distance). The second processor 12 and the display processor 14 execute the above-described change processing and display processing in cooperation with each other.

(2) Operation of Design Apparatus

A design procedure (a design method according to one embodiment) for the design apparatus 1 configured as described above will be described next with reference to FIGs. 2 to 5 and FIGs. 8 to 19 and in accordance with flowcharts (steps S11 to S42) illustrated in FIGs. 6 and 7.

(2-1) Setting of Height Dimension

When the CPU 10 executes the design program 25 in order to create the apparatus specification-and-plan of the rack-mount apparatus to be designed by the design apparatus 1, the display processor 14 displays, on the display 40, a screen for prompting the user to input apparatus outer-shape information (in step S11), In this case, the user is, for example, personnel in the apparatus specification department and the apparatus outer-shape information the user is promoted to input is, for example, a numeric value of a U number or a value in units of mm that can specify the apparatus size (height) and information specifying the installation or non-installation of the slide rails.

When the user inputs the apparatus outer-shape information via the input device 30 in response to the prompt for inputting the apparatus-outer-shape information (YES route from step S12), the first processor 11 determines whether or not the input numeric value is a U number or a value in units of mm. When the numeric value input via the input device 30 is a value in units of mm, the first processor 11 divides the numeric value in units of mm by 44.45 for conversion into a value in the unit U, i.e., a U number. On the basis of the input U number and the outer-shape information table 21 (the height dimension rules) in the storage 20, the first processor 11 determines the height dimension of the rack-mount apparatus (in step S13),

Since rack-mount apparatuses according to a given standard defined by JIS or EIA are specified by the unit U, the height dimensions of the rack-mount apparatuses are basically multiplies of 44.45 mm. Thus, when 4U is specified as the apparatus height, the actual height dimension is 44.45 mm × 4 = 177.8 mm when simply calculated. This value is the maximum height dimension of a 4U apparatus, and during design of the apparatus in practice, depression due to the tolerance and depression due to the weight of a rack-mount apparatus when it is mounted in the rack, the plate thickness of the housing of the rack-mount apparatus, and so on need to be considered. Without consideration of the depression, the plate thickness, and so on, the rack-mount apparatuses, when placed in the rack, may physically interfere with apparatuses placed above and below the rack-mount apparatus. Thus, it is desired to consider the depression, the plate thickness, and so on in order to avoid the physical interferences.

Accordingly, on the basis of the input U number and the outer-shape information table 21 (the height dimension rules) in the storage 20, the height dimension of the rack-mount apparatus is determined in the manner described below.

When the specified height is 1U, the height dimension is determined to be 42.95 mm (= 44.45 mm - 1.5 mm) in order to ensure a clearance of 0.5 mm above the rack-mount apparatus and a clearance of 1 mm below the rack-mount apparatus.

When the specified height is 2U or more, the height dimension is determined as 44.45 mm × "specified U number," - 2 mm in order to ensure a total of 2 mm for the clearance above and the clearance below the rack-mount apparatus. For example, for 4U, the height dimension is determined to be 175.8 mm (= 44.45 mm × 4 - 2 mm).

For 1U, since the apparatus size has no margin, the value 1.5 mm is subtracted from 1U (44.45 mm). In contrast, for 2U or more, the value subtracted from 44.45 mm × "specified U number" is set to 2 mm.

In the present embodiment, the plate thickness of the housing of the rack-mount apparatus is set to, for example, 1 mm. As a result, the height of the available space in which components (units) may be installed in the rack-mount apparatus is a value obtained by subtracting a total thickness (i.e., 2 mm) of the upper and lower plates from the height dimension determined in m S13. The height of this available space serves as a reference for placement of the components in the rack-mount apparatus and for display of the interior of the rack-mount apparatus.

When the input value is not a multiple of 44,45 mm, the function of the third processor 13 may determine that there is no correspondence between the standard of the rack-mount apparatus and the result of the outer-dimension determination preformed by the first processor 11 and may issue a notification to that effect to the user. In this case, the third processor 13 uses the function of the display processor 14 to display a screen on the display 40 to notify the user that there is no correspondence, to thereby prompt the user to determine whether or not to continue the design processing based on the numeric value that is not a multiple of 44.45 mm. When the user wishes to continue the design processing based on the numeric value that is not a multiple of 44.45 mm, the processing is continued. For example, since a 1.5U rack-mount apparatus occupies a space for 2U when mounted in the rack, a clearance corresponding to 0.5U may be ensured above and below the rack-mount apparatus. That is, since 1.5U is 66.675 mm, 1U < 1.5U < 2U-2 mm is given. Thus, when the specified height is 1.5U or the like, a value (66.675 mm for 1.5U) corresponding to 1.5U or the like is directly used as the height dimension of the rack-mount apparatus.

(2-2) Setting of Width Dimension

The outer shape of the rack-mount apparatus is limited depending on the installation or non-installation of the slide rails. Thus, when the height dimension is set in step S13, the first processor 11 determines a width dimension of the rack-mount apparatus (in step S14) on the basis of the input information specifying the installation or non-installatian of the slide rails and the outer-shape information table 21 (the width dimension rules) in the storage 20. In this case, an initial value of the width dimension (a default width size) of the rack-mount apparatus is set to a value for a case in which no slide rails are installed, for example, to 440 mm.

When the installation of the slide rails is specified, the width dimension of the rack-mount apparatus is set to 420 mm, which is a value obtained by subtracting the total width (20 mm) of the left and right slide rails from the default width "440 mm", in order to ensure the space for installing the slide rails to the left and right side surfaces of the rack-mount apparatus. The slide rails may be used for the rack-mount apparatus, for example, when the weight of the rack-mount apparatus exceeds 20 kg and the components in the rack-mount apparatus are actively replaced, Information specifying that the slide rails are to be placed at the left and right side surfaces of the rack-mount apparatus is registered in the placement-restriction table 23 in the storage 20 as a placement rule.

When the non-installation of the slide rails is specified, the width dimension of the rack-mount apparatus is set to the default width "440 mm". In this case, since the rack-mount apparatus has a structure such that it is placed on the shelf plate of the rack, the height dimension is modified by subtracting the plate thickness (e.g., typically, 1.6 mm) of the shelf plate from the height dimension determined in step S13, in order to ensure the space for the thickness of the shelf plate. For example, for a 2U apparatus without slide rails, the height dimension "86.9 mm (= 44.45 mm × 2 - 2 mm)" determined in step S13 is further modified by subtracting 1.6 mm therefrom, so that a height dimension of 85.3 mm is determined.

When the rack-mount apparatus may be maintained from the front or back side thereof without being pulled out of the rack, the installation of the slide rails may be made unselectable.

In the present embodiment, the plate thickness of the housing of the rack-mount apparatus is set to, for example, 1 mm, as described above. As a result, the width of the available space in which components (units) may be placed in the rack-mount apparatus has a value obtained by subtracting the total thickness (i.e., 2 mm) of the left and right plates from the width dimension determined in step S14. That is, when the width dimension is 440 mm, the width of the available space is 438 mm, and when the width dimension is 420 mm, the width of the available space is 418 mm. The width of the available space serves as a reference for placement of the components in the rack-mount apparatus and for display of the interior of the rack-mount apparatus.

(2-3) Temporal Setting of Depth Dimension

After the height dimension is set in step S13 and the width dimension is set in step S14, the first processor 11 temporarily sets the depth dimension of the rack-mount apparatus to, for example, 700 mm (in step S15). In this case, the value of 700 mm may be automatically selected as the depth dimension to be temporarily set. Alternatively, the user may specify and input the value of the depth dimension by referring to the display 40 and operating the input device 30. In this case, the function of the third processor 13 checks the correspondence between the value input via the input device 30 and the standard of the rack-mount apparatus. In the absence of correspondence, an error notification is issued to the user via the display 40.

After the height and width dimensions are set in steps S13 and S14 and the depth dimension is temporarily set in step S15, the display processor 14 displays, on the display 40, a result of the outer-dimension determination performed by the first processor 11 as the outer shape of the rack-mount apparatus (in step S16), for example, as illustrated in FIG, 8. FIG. 8 illustrates an example of an image displayed during setting of outer dimensions. In the display example illustrated in FIG. 8, the outer shape of the rack-mount apparatus is displayed in a perspective view of the apparatus housing. In the display example illustrated in FIG. 8, the height dimension and the width dimension set in steps S13 and S14 are faithfully represented and the depth dimension temporarily set in step S15 is represented with, for example, a substitute in a unit length, By referring to such an image (as illustrated in FIG. 8) displayed on the display 40, the user checks the outer shape set or temporarily set in steps S13 to S15 and performs a change operation by using the input device 30.

(2-4) Placement of Power Supply

After the outer dimensions of the rack-mount apparatus are set, the size and placement of the power supply is determined. This is because the apparatus configuration cannot be specifically determined until a specific power value of the power supply is determined. Thus, after the outer dimensions of the rack-mount apparatus and the outer shape of the rack-mount apparatus are displayed, the display processor 14 displays, on the display 40, a screen for prompting the user to input power-supply information (in step S17).

In this case, the power-supply option candidates (at least two types of off-the-shelf power supply: see FIG. 5) that can be installed in the rack-mount apparatus are read from the unit-information table 24 in the storage 20 and are displayed on the display 40. The option candidates read from the unit-information table 24 are power supplies corresponding to the U number input in step S11, The power supply information the user is prompted to input in step S17 includes, for example, information specifying a redundant power-supply configuration or a non-redundant power-supply configuration, information specifying use of an off-the-shelf power supply or a newly released power supply, and information regarding the size of the off-the-shelf power supply when the off-the-shelf one is used.

When the user inputs power-supply information via the input device 30 (YES route from step S18) in response to the prompt for inputting the power-supply information, the second processor 12 selects and determines the quantity of power supplies, the size of the power supply(s), and the placement position(s) of the power supply(s) (in step S19) on the basis of the input power-supply information and the placement-restriction table 23 (the power-supply placement rule: see FIG. 4) in the storage 20.

In this case, when the power-supply information specifies the redundant power-supply configuration, the second processor 12 sets the quantity of power supplies to 2 and selects power supplies with a 1+1 redundant configuration. A 2+1 redundant configuration and a 2+2 redundant configuration may also be listed in the unit-information table 24 as the option candidates, in which case, when the redundant configuration is selected, the user may select one of the 1+1 redundant configuration, the 2+1 redundant configuration, and the 2+2 redundant configuration. When the 2+1 redundant configuration or the 2+2 redundant configuration is selected, the quantity of power supplies is 3 or 4.

When the power-supply information specifies the non-redundant power-supply configuration, the second processor 12 sets the quantity of power supplies to 1. The rack-mount apparatus itself may have a redundant configuration, that is, a configuration having two apparatuses, i.e., one working apparatus and one backup apparatus. In such a case, the power-supply information specifies the non-redundant power-supply configuration.

When the power-supply information specifies an off-the-shelf power supply, the power-supply size is selected from the sizes of off-the-shelf power supplies having specific power values. In this case, on the screen for the prompt in step S17, the sizes of the off-the-shelf power supplies are displayed in a tabular form so as to allow the user to select a desired one from the off-the-shelf-power-supply sizes in the displayed table.

When the power-supply information specifies a newly released power supply, the user specifies and inputs the power-consumption value of the rack-mount apparatus as well by using the input device 30. Using the input power-consumption value and 1cc/W (which is a volume equivalent value), the second processor 12 determines a volume value of the newly released power supply and selects, from the off-the-shelf power supplies, a power supply having a volume value that is the closest to the determined volume value.

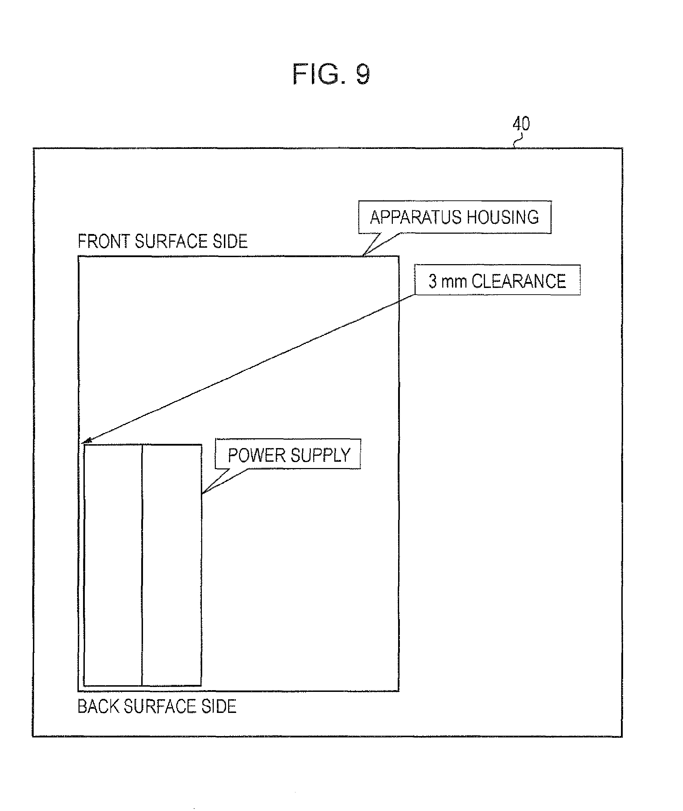

When the quantity and the size of power supplies are selected, the placement positions of the power supplies are determined based on the placement-restriction table 23 (the power-supply placement rule) in the storage 20. That is, in the available space in the rack-mount apparatus, the power supplies are installed at the back surface side of the rack-mount apparatus and at the left side when viewed from the back of the rack-mount apparatus (see FIG. 9). A clearance of 3 mm is also provided between the left side surface of the power supply and an inner left side surface of the available space (see FIG. 9). The clearance of 3 mm is provided in order to install the slide rails to the side surfaces of the rack-mount apparatus and to ensure space for screws used to secure the rack-mount apparatus to the shelf plate, No clearance or small clearance may be provided between a back surface of a power supply and an inner back surface of the available space (see FIG. 9),

When the placement positions of the power supplies are determined in step 53.9, the display processor 14 creates an image indicating the installation layout state of the power supplies in the rack-mount apparatus, on the basis of the result of the power-supply placement performed by the second processor 12 and the power-supply image information and size information in the unit-information table 24. The created image is displayed on the display 40 (in step S20), for example, as illustrated in FIG, 9. FIG. 9 illustrates an example of an image displayed during placement of power supplies. In the display example illustrated in FIG. 9, a plan view indicating a state in which two power supplies are placed in the available space in the rack-mount apparatus is displayed on the display 40. By referring to such an image (as illustrated in FIG. 9) displayed on the display 40, the user checks the power supplies selected and placed in step S19 and performs a change operation by using the input device 30.

(2-5) Placement of Cooling Fan

After the power supplies are placed and the placement state of the power supplies in the available space in the rack-mount apparatus is displayed, the display processor 14 displays, on the display 40, a screen for prompting the user to input fan information (in step S21). In this case, the fan option candidates that may be installed in the rack-mount apparatus are also read from the unit-information table 24 in the storage 20 (see FIG. 5) and are displayed on the display 40. The option candidates read from the unit-information table 24 are fans corresponding to the U number input in step S11. The fan information the user is prompted to input in step S21 includes, for example, the size and quantity of fans.

When the user inputs fan information via the input device 30 (YES route from step S22) in response to the prompt for inputting the fan information, the second processor 12 selects and determines the quantity, the size, and the placement positions of the fans (in step S23) on the basis of the input fan information and the placement-restriction table 23 (the fan placement rule: see FIG. 4) in the storage 20.

Based on the fan information, a 40 mm square cooling fan is selected for a 1U apparatus, one of 40 mm, 60 mm, and 80 mm square cooling fans is selected for a 2U apparatus, and a 120 mm square cooling fan is selected for a 3U apparatus or a 4U apparatus. In the rack-mount apparatus to be designed, the default fan configuration is a redundant configuration and thus the fan information specifies that the quantity of fans is a multiple of 2. The shape of the fans, particularly the thickness and height of the fans, are preset by default according to the U number.

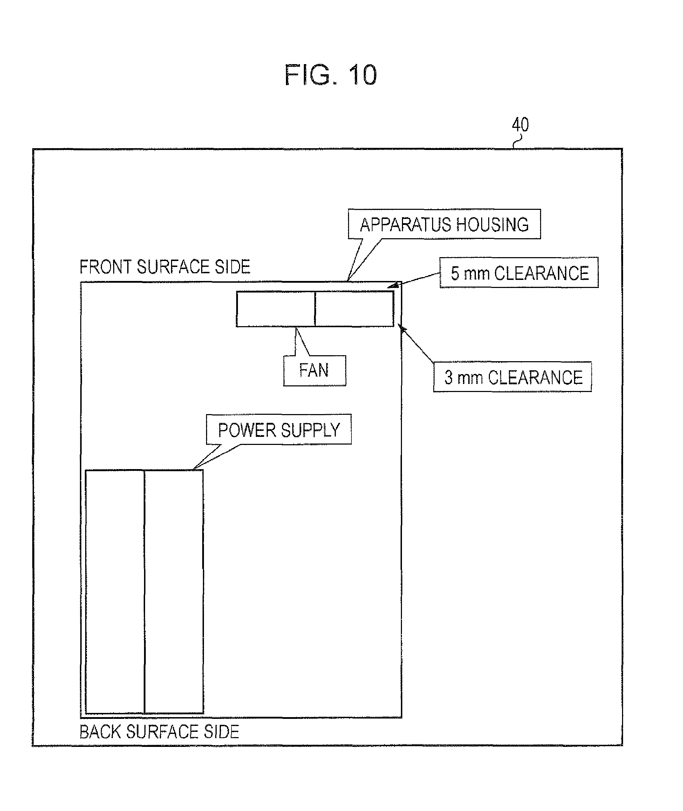

When the quantity and the size of fans are specified, the placement positions of the fans are determined based on the placement-restriction table 23 (the fan placement rule) in the storage 20. That is, in the available space in the rack-mount apparatus, the fans are placed at the front surface side of the rack-mount apparatus and at the right side, when viewed from the back of the rack-mount apparatus, so as to diagonally oppose the power supplies (see FIG. 10). A clearance of 3 mm is provided between the right side surface of the fan and an inner right side surface of the available space (see FIG. 10). The clearance of 3 mm is provided in order to install the slide rails to the side surfaces of the rack-mount apparatus and to ensure space for screws used to secure the rack-mount apparatus to the shelf plate. A clearance of 5 mm is also provided between a front surface of the fans and an inner front surface of the available space (see FIG. 10). The clearance of 5 mm is provided in order to ensure space of sheet-metal or plastic-molded modular components to be placed in the vicinity of the fans,

When the placement positions of the fans are determined in step S23, the display processor 14 creates an image indicating the installation layout state of the fans in the rack-mount apparatus, on the basis of the result of the fan placement performed by the second processor 12 and the fan image information and size information in the unit-information table 24. The created image is displayed on the display 40 (in step S24), for example, as illustrated in FIG. 10. FIG. 10 illustrates an example of an image displayed during placement of cooling fans. In the display example illustrated in FIG. 10, a plan view indicating a state in which a redundant configuration with two fans are placed in the available space in the rack-mount apparatus is displayed on the display 40. By referring to such an image (as illustrated in FIG. 10) displayed on the display 40, the user checks the fans selected and placed in step S23 and performs a change operation by using the input device 30.

(2-6) Placement of I/O Device

Thus, after the fans are placed and the placement state of the fans in the available space in the rack-mount apparatus is displayed, the display processor 14 displays, on the display 40, a screen for prompting the user to input I/O-device information, such as information of a HDD, DVD, and CD-ROM (in step S25). In this case, the I/O-device option candidates that may be installed in the rack-mount apparatus are also read from the unit-information table 24 in the storage 20 (see FIG. 5) and are displayed on the display 40.

The I/O device information the user is prompted to input in step S25 includes, for example, information specifying the type(s) and the quantity of I/O devices, such as a HDD, DVD, and CD-ROM, to be built into the rack-mount apparatus. In this case, when "1" or more is specified as the quantity of I/O devices with respect to the type of I/O device to be installed, that type of I/O device is selected. On the other hand, with respect to the types of I/O devices that are not to be installed, "0" is specified as the quantity of I/O devices. That is, basically, by simply inputting the quantity in response to the prompt in step S25, the user may specify the type and the quantity of I/O devices to be installed.

When the user inputs the I/O device information via the input device 30 (YES route from step S26) in response to the prompt for inputting the I/O device information, the second processor 12 selects and determines the type and the quantity of I/O devices and the placement position(s) of the I/O device(s) (in step S27) on the basis of the input I/O device information and the placement-restriction table 23 (the HDD, DVD, and CD-ROM placement rule: see FIG. 4) in the storage 20.

On the basis of the I/O device information, one of a 2.5-inch HDD and a 3.5-inch HDD is selected, a DVD (e.g., a slim type) and a CD-ROM is selected, and the quantity of devices are also specified.

When the types and the quantity of I/O devices are specified, the placement positions of the HDD, DVD, CD-ROM, and so on are determined based on the placement-restriction table 23 (the HDD, DVD, and CD-ROM placement rule) in the storage 20.

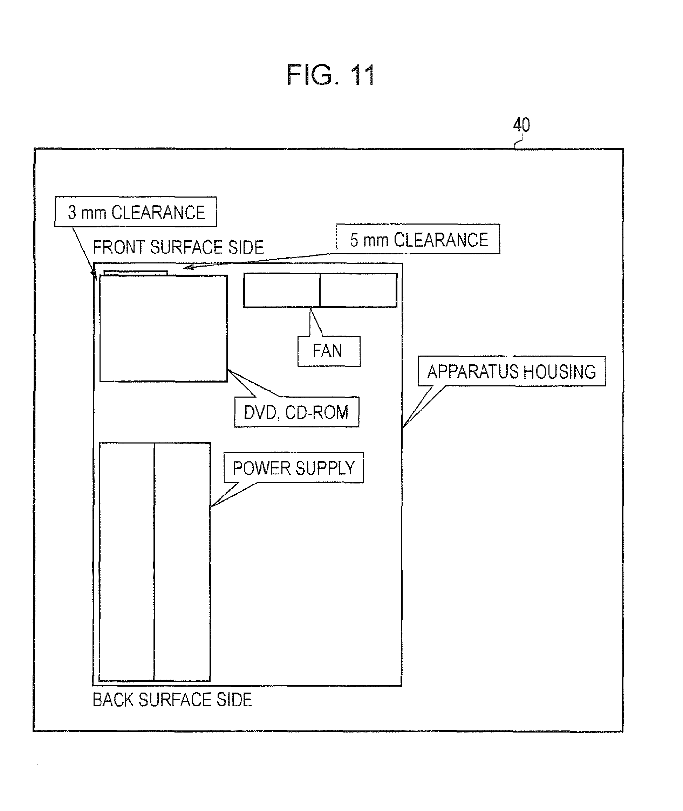

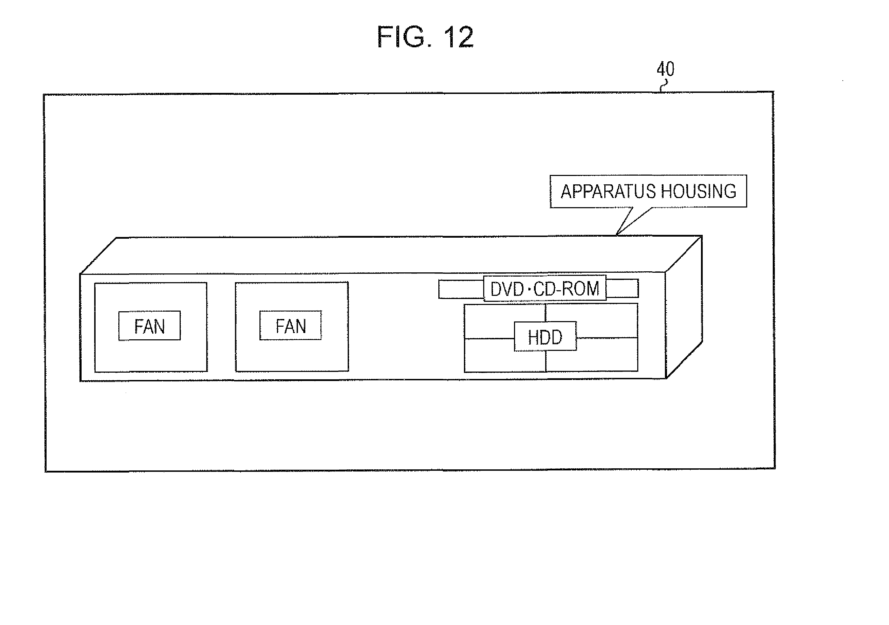

That is, in the available space in the rack-mount apparatus, the HDD, the DVD, and the CD-ROM are placed in front of the power supplies, at the front surface side of the rack-mount apparatus, and at the left side when viewed from the back of the rack-mount apparatus (see FIGs. 11 and 12). A clearance of 3 mm is provided between the left side surface of the HDD, DVD, and CD-ROM and the inner left surface of the available space (see FIG. 11). The clearance of 3 mm is also provided in order to install the slide rails to the side surfaces of the rack-mount apparatus and to ensure space for screws used to secure the rack-mount apparatus to the shelf plate. A clearance of 5 mm is also provided between a front surface of the HDD, DVD, and CD-ROM and the inner front surface of the available space (see FIG. 11). The clearance of 5 mm is provided in order ensure space for securing the HDD, DVD, and CD-ROM.

When the placement positions of the I/O devices are determined in step S27, the display processor 14 creates an image indicating the installation layout state of the I/O devices in the rack-mount apparatus, on the basis of the result of the I/O-device placement performed by the second processor 12 and the I/O-device image information and size information in the unit-information table 24. The created image is displayed on the display 40 (in step S28), for example, as illustrated in FIGs. 11 and 12.

FIGs. 11 and 12 illustrate examples of images displayed during placement of I/O devices. In the display example illustrated in FIG. 11, a plan view indicating a state in which a DVD/CD-ROM and a HDD are placed in the available space in the rack-mount apparatus is displayed on the display 40. In the display example illustrated in FIG. 12, a perspective view indicating a case in which a 2U apparatus including a DVD/CD-ROM and a HDD placed in the available space in the rack-mount apparatus is viewed from the front side of the rack-mount apparatus is displayed on the display 40. By referring to such an image (as illustrated in FIG. 11 or 12) displayed on the display 40, the user checks the HDD, DVD, and CD-ROM placed in step S27 and performs a change operation by using the input device 30.

(2-7) Placement of System Board

After the HDD, DVD, and CD-ROM are placed and the placement state of the HDD, DVD, and CD-ROM in the available space in the rack-mount apparatus is displayed, the second processor 12 determines the placement position and the size of the system board (in step S29) on the basis of the placement-restriction table 23 (the system-board placement rule: see FIG. 4) in the storage 20.

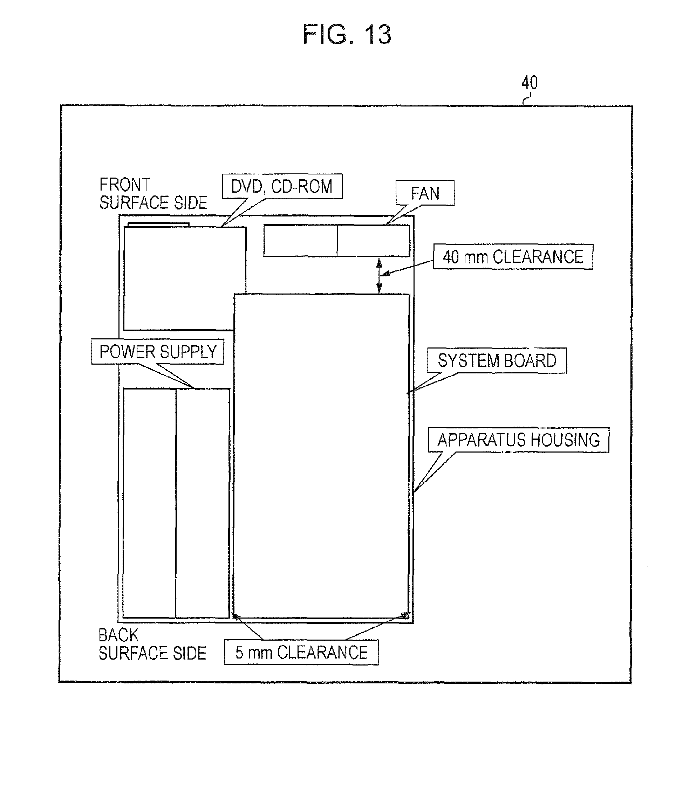

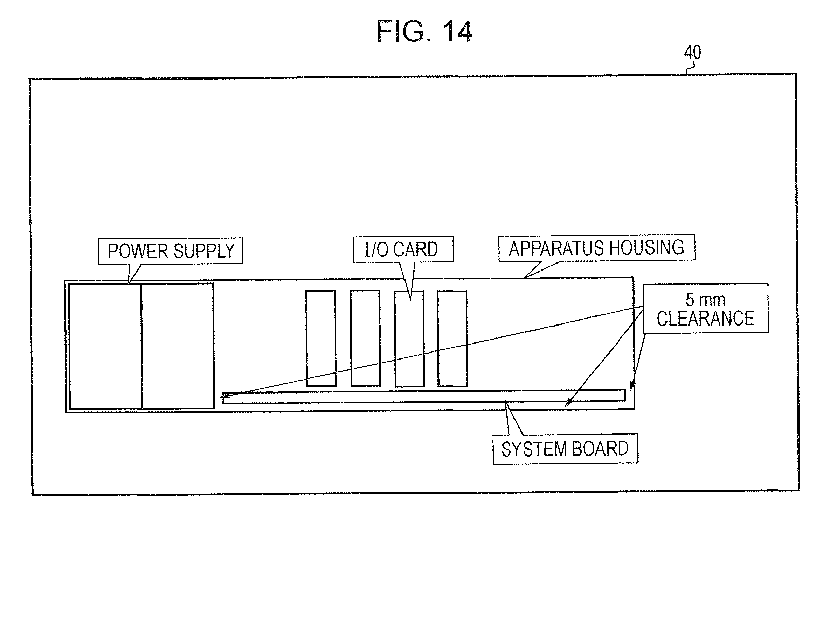

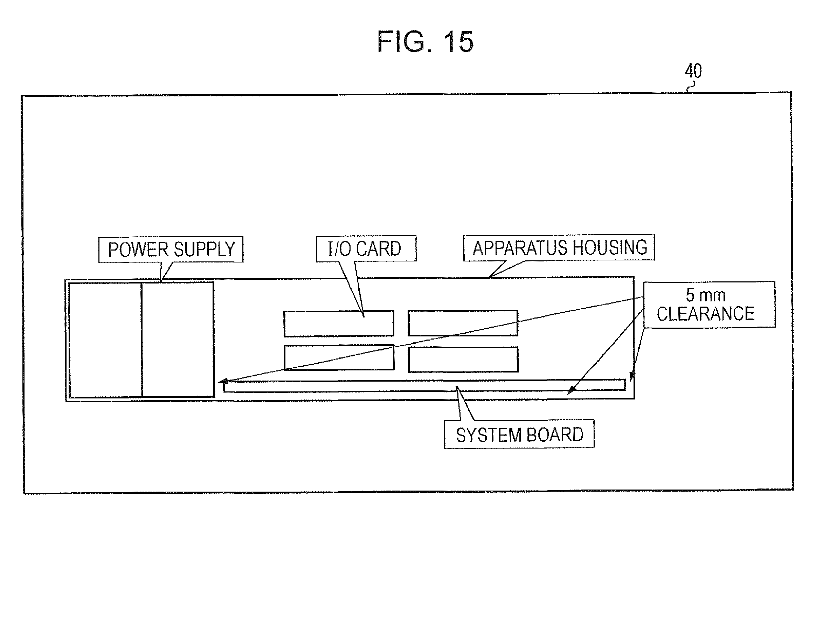

That is, the system board is horizontally placed at a position 40 mm behind the fans in the available space in the rack-mount apparatus so as to provide a clearance of 5 mm between the system board and the inner surface of the available space and a clearance of 5 mm between the system board and the side surface of the power supply (see FIGs. 13 to 15) in consideration of maintenance. The system board is also placed 5 mm apart from a bottom surface of the available space (see FIGs. 14 and 15). The system board is placed at a position 40 mm behind the fans, as a result of consideration of the power supply for the fans, a signal-control substrate, a cable, and so on. The reason why the system board is placed 5 mm apart from the bottom surface of the available space is to prevent components and leads at the soldering-surface side from interfering with the bottom surface of the available space and to provide whisker countermeasures. As a result of the placement of the system board in such a manner, the shape, the size, and the placement position of the system board are temporarily determined.

However, the depth dimension of the rack-mount apparatus at this point is temporarily set to 700 mm, as described above, and is not a final depth dimension. The final depth dimension is determined in step S37, as described below. That is, the shape, the size, and the placement position of the system board are lastly determined based on the final depth dimension determined in step S37.

When the shape, the size, and the placement position of the system board are determined in step S29, the display processor 14 creates an image indicating the installation layout state of the system board in the rack-mount apparatus, on the basis of the result of the system-board placement performed by the second processor 12 and the system-board image information and size information (e.g., the plate thickness) in the unit-information table 24. The created image is displayed on the display 40 (in step S30), for example, as illustrated in FIG. 13. FIG. 13 illustrates an example of an image displayed during placement of a system board. In the display example illustrated in FIG. 13, a plan view indicating a state in which a system board is placed in the available space in the rack-mount apparatus is displayed on the display 40. By referring to such an image (as illustrated in FIG. 13) displayed on the display 40, the user checks the system board placed in step S29 and performs a change operation by using the input device 30.

(2-8) Placement of I/O Card

After the system board is placed and the placement state of the system board in the available space in the rack-mount apparatus is displayed, the display processor 14 displays, on the display 40, a screen for prompting the user to input I/O-card information (in step S31). In this case, I/O-card (e.g., PCI card) option candidates that may be installed in the rack-mount apparatus are also read from the unit-information table 24 in the storage 20 (see FIG. 5) and are displayed on the display 40. The I/O card information the user is prompted to input in step S31 includes, for example, information specifying standard cards or non-standard cards, the number of cards, and information specifying active/non-active replacement of the cards.

When the user inputs the I/O card information via the input device 30 (YES route from step S32) in response to the prompt for inputting the I/O card information, the second processor 12 selects and determines the types of I/O cards and the placement positions thereof (in step S33) on the basis of the input I/O card information and the placement-restriction table 23 (the I/O card placement rule: see FIG. 4) in the storage 20.

When the I/O card information specifies standard cards, a standard-card type, i.e., one of a full-height type (short, 2/3-size, or long) or a low-profile type, is also specified and a standard card corresponding to the specified type is selected by the second processor 12.

When standard cards are selected, the placement positions of the standard cards are determined based on the information specifying the active/non-active replacement and the placement-restriction table 23 (the I/O-card placement rule) in the storage 20.

That is, the standard cards are placed on the system board in the available space in the rack-mount apparatus (see FIGs. 14 and 15). In this case, one of a vertical placement (see FIG. 14) and a horizontal placement (see FIG. 15) may also be selected as the placement direction of the standard cards. For a 1U apparatus, however, the cards may only be horizontally placed regardless of full-height cards or low-profile cards. Also, 2U and larger apparatuses allow for vertical placement of low-profile cards and 3U and larger apparatuses allow for vertical placement of full-height cards.

When the I/O card information specifies the active/non-active replacement, a structure for handling static electricity during active replacement needs to be provided in the vicinity of the cards. Thus, when the user requests installation of two or more cards, the pitch of the cards is set to 20 mm for the non-active replacement and is set to 25.4 mm for the active replacement.

On the other hand, when the I/O card information specifies non-standard cards, i.e., specifies cards whose sizes are designated by arbitrary dimensions, the user inputs arbitrary dimensions as the size of the non-standard cards by using the input device 30. The second processor 12 places the non-standard cards on the system board on the basis of the input arbitrary dimensions and the I/O-card placement rule. During the placement of the non-standard cards, the active/non-active replacement is considered as in the case of the standard cards.

When the placement positions of the I/O cards are determined in step S33, the display processor 14 creates an image indicating the installation layout state of the I/O cards in the rack-mount apparatus, on the basis of the result of the I/O-card placement performed by the second processor 12 and the I/O-card image information and size information in the unit-information table 24, The created image is displayed on the display 40 (in step S34), for example, as illustrated in FIGs. 14 and 15. FIG. 14 illustrates an example of an image displayed when I/O cards are vertically placed and FIG. 15 illustrates an example of an image displayed when I/O cards are horizontally placed. In the display examples illustrated in FIGs. 14 and 15, a view indicating a state in which I/O cards are placed in the available space in the rack-mount apparatus, when the rack-mount apparatus is viewed from the back surface side of the rack-mount apparatus, is displayed on the display 40. By referring to such an image (as illustrated in FIG. 14 or 15) displayed on the display 40, the user checks the I/O cards selected and placed in step S33 and performs a change operation by using the input device 30.

When the I/O cards are not fit in a given area on the system board as a result of the I/O card processing in step S33, it is regarded that an installation error occurred and a warning is issued to notify the user about the occurrence of the installation error. Upon receiving the warning, the user may reset the number of I/O cards and may manually modify the placement positions of the I/O cards.

More specifically, the third processor 13 checks correspondence between the result of the outer-dimension determination performed by the first processor 11 (the standard of the rack-mount apparatus) and the result of the I/O-card placement performed by the second processor 12. That is, the third processor 13 checks whether or not the placed I/O cards physically interfere with the housing of the rack-mount apparatus. When interference occurs, the display processor 14 issues the aforementioned warning to the user via the display 40 and also displays the interference portion in the image on the display 40 in an enhanced manner.

On the screen on which such an image is displayed, the user specifies an I/O card of which the placement position he or she wishes to modify by operating the input device 30. As a result, the distance between a given origin and the I/O card (e.g., the lower left position thereof) is displayed. This arrangement allows the user to change the placement position of the I/O card to an optimum position through modification while referring to the displayed distance. In this case, by referring to the unit-information table 24 to re-specify the option candidate via the input device 30, the user may change the I/O card to a different type of I/O card.

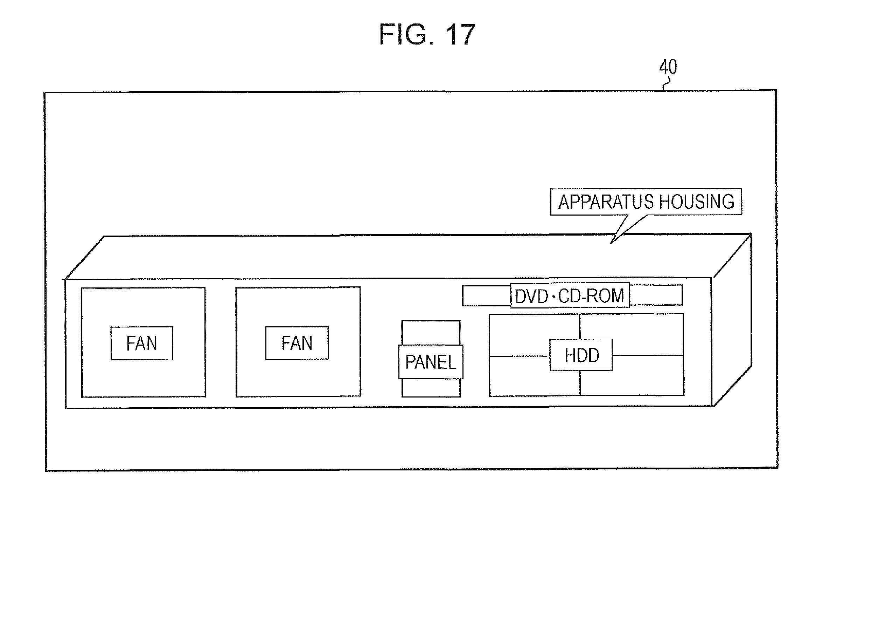

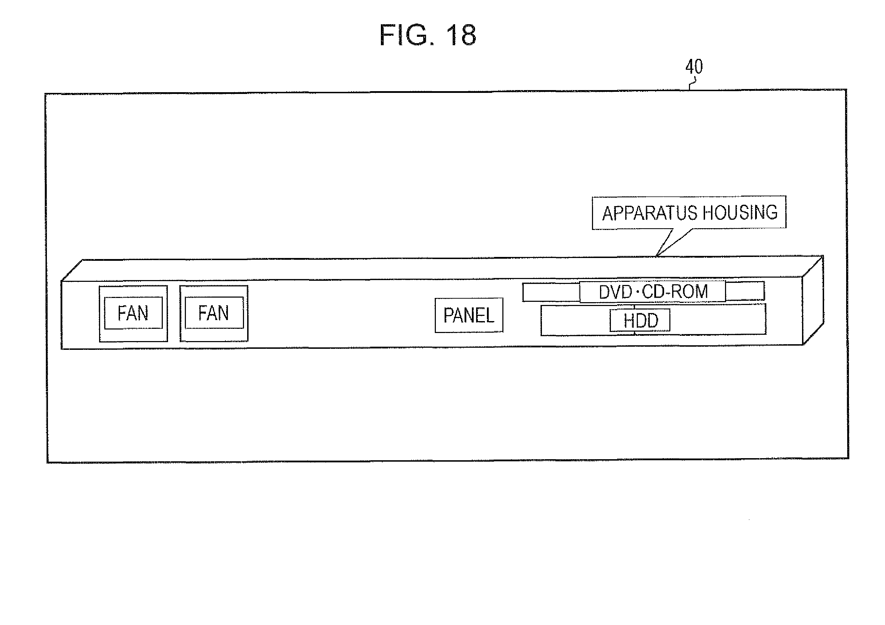

In steps S31 to S34, a memory and a panel (an operation panel) may be placed in addition to the I/O cards. In such a case, the second processor 12 places a memory on the system board on the basis of the placement-restriction table 23 (the memory placement rule) in the storage 20 and the specification information (e,g., the information specifying the memory option candidates) input by the user via the input device 30. The second processor 12 also places a panel at the front surface of the rack-mount apparatus on the basis of the placement-restriction table 23 (the panel placement rule) in the storage 20 and the specification information (e.g., the information specifying the panel option candidates) input by the user via the input device 30. On the basis of the image information in the unit-information table 24, the display processor 14 displays the results of the placement of the memory and the panel on the display 40 (see FIGs. 17 and 18).

(2-9) Setting of Depth Dimension

After the I/O devices are so on are placed and the placement state of the I/O devices and so on in the available space in the rack-mount apparatus is displayed, the display processor 14 displays, on the display 40, a screen for prompting the user to input information used for setting the depth dimension (in step S35). The information used for setting the depth dimension, the user being prompted to input the information in step S35, includes, for example, information specifying a depth-dimension candidate (i.e., one of recommended values) and a minimum bend radius value (or a type) of a cable at the back of the rack-mount apparatus.

In this case, recommended values 500 mm, 600 mm, 650 mm, and 700 mm for the depth dimension of the rack-mount apparatus are read from the outer-shape information table 21 in the storage 20 (see FIG. 2) and are displayed on the display 40. The displayed recommended values for the depth dimension may be selected from recommended values that are settable in practice, on the basis of the result of the installation-unit placement.

With respect to the rack-mount apparatus having a selected or temporarily set depth dimension, the display processor 14 displays, on the display 40, the distance between the back surface of the rack-mount apparatus and the inner side of the back door of the rack as a maximum dimension for accommodating a cable, as illustrated in FIG. 16. FIG. 16 illustrates an example of an image displayed during setting of a depth dimension, In the display image illustrated in FIG. 16, an image of the outer shape of a rack is displayed on the display 40. More specifically, a rack having a gap of 1050 mm between an outer surface of a front door of the rack and an outer surface of the back door of the rack is displayed and a maximum dimension of 230 mm for accommodating a cable when the rack-mount apparatus with a depth of 700 mm is mounted to rack posts of the rack are also displayed. This maximum dimension of 230 mm corresponds to a gap between the back surface of the rack-mount apparatus and the inner surface of the back door of the rack. In the display example illustrated in FIG. 16, a cable placed between the back surface of the rack-mount apparatus and the inner surface of the back door of the rack is also displayed. The minimum bend radius of the displayed cable corresponds to the maximum dimension of 230 mm. A given gap (of about 120 mm in the example of FIG. 16) is ensured between the front surface of the rack-mount apparatus and the outer surface of the front door of the rack.

After carrying out study by referring to the screen of the display 40 displayed as illustrated in FIG. 16, the user operates the input device 30 to input a desired cable minimum bend radius and a depth dimension. In this case, when the user inputs a value exceeding the maximum dimension for cable accommodation as a desired cable minimum bend radius, the third processor 13 determines that there is no correspondence and issues an error notification to the user.

When the user inputs information (the cable minimum bend radius and so on) used for setting the depth dimension by operating the input device 30 in response to the information-input prompt (YES route from step S36), the first processor 11 lastly determines a depth dimension of the rack-mount apparatus (in step S37) on the basis of the input cable minimum bend radius and so on and the recommended value of the depth dimension.

When a cable type, instead of the value of the cable minimum bend radius, is input via the input device 30 as the specification information, the first processor 11 reads, from the unit-information table 24, the minimum bend radius value corresponding to the input cable type. The first processor 11 lastly determines the depth dimension of the rack-mount apparatus on the basis of the read minimum bend radius value and the recommended value of the depth dimension.

In the above-described processing, the outer shape of the rack-mount apparatus, in other words, the available space in the rack-mount apparatus, and the layout of the interior of the rack-mount apparatus are roughly determined, Thus, the second processor 12 lastly determines the size (particularly, the length in the apparatus depth direction) and the placement position of the system board, on the basis of the placement-restriction table 23 (the system-board placement rule: see FIG. 4) in the storage 20.

For example, the display processor 14 displays, on the display 40, the lastly determined outer shape of the rack-mount apparatus and the layout of the units including the system board having the lastly determined placement position and size (in step S38), for example, as illustrated in FIGs. 17 to 19.

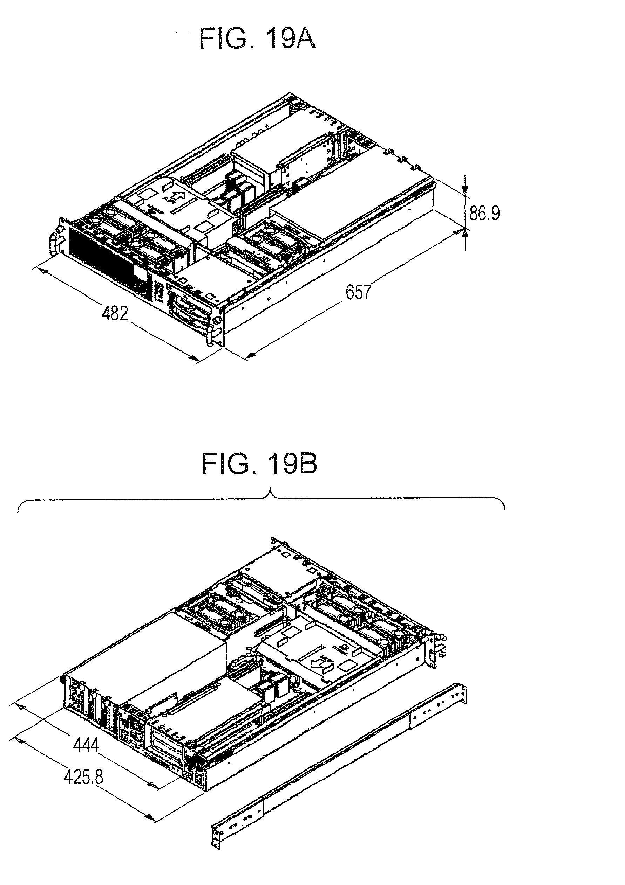

FIGs. 17 to 19 illustrate examples of an image displayed when setting of the depth dimension is completed. In the display example illustrated in FIG. 17, a perspective view of the layout plan of the rack-mount apparatus created by the design apparatus 1 and having a height of 2U or larger, when the rack-mount apparatus is viewed from the front side of the of the rack-mount apparatus, is displayed on the display 40. In the display example illustrated in FIG. 18, a perspective view of the layout plan of a 1U apparatus created by the design apparatus 1, when the rack-mount apparatus is viewed from the front side of the of the rack-mount apparatus, is displayed on the display 40, In the display examples illustrated in FIGs. 19A and 19B, more specific layout plans of rack-mount apparatuses created by the design apparatus 1 are displayed. In the display example illustrated in FIG. 19A, a perspective view of a layout plan of a rack-mount apparatus that does not have slide rails is displayed, and in the display example illustrated in FIG. 19B, a perspective view of a layout plan of a rack-mount apparatus having slide rails (only one of which is illustrated) is displayed,

In step S37 described above, a cable support arm may also be placed. In this case, the second processor 12 places the cable support arm at the back of the rack-mount apparatus on the basis of the placement-restriction table 23 (the cable-support-arm placement rule) in the storage 20. On the basis of the image information in the unit-information table 24, the display processor 14 displays, on the display 40, the result of the placement of the cable support arm.

(2-10) Consistency Check and Final Check

After the processing in steps S11 to S38 is finished, the outer shape and layout plan of the rack-mount apparatus are completed. As described above in the descriptions of steps S15, S33, and so on, the third processor 13 performs correspondence check during the processing in steps S11 to S38. The third processor 13 checks correspondence between the standard of the rack-mount apparatus and the specification information input via the input device 30, the result of the outer-dimension determination performed by the first processor 11, or the result of the installation-unit placement performed by the second processor 12, as appropriate.

When there is no correspondence, i,e., when a problem of the rack-mount apparatus not satisfying desired specifications occurs, the display processor 14 displays a warning message on the display 40 to notify the user about the problem. At the same time, the display processor 14 displays a problematic portion (a problematic unit) associated with an no correspondence portion in an enhanced manner, for example, in a highlighted manner and performs display for prompting the user to make a selection as to whether or not to modify the problematic portion.

When modification of the problematic portion is selected, the user specifies the problematic portion on the screen of the display 40 by operating the input device 30. As a result, the distance between the given origin and the problematic portion (e.g., the lower left position thereof) is displayed on the screen. This arrangement allows the user to change the placement position of the problematic portion to an optimum position through modification while referring to the displayed distance. In this case, by referring to the unit-information table 24 to re-specify the option candidate via the input device 30, the user may change the component or the like at the problematic portion to a different type.

The problem of the rack-mount apparatus not satisfying the desired specifications may occur, for example, in a case in which a unit to be installed in the rack-mount apparatus is not fit into the apparatus housing having the set outer-shaper dimensions (the height, width, and depth). Examples of other possible cases include a case in which the height dimension and the depth dimension input by the user via the input device 30 do not match the dimension rules or the like of the outer-shape information table 21 and a case in which the cable minimum bend radius value input by the user via the input device 30 exceeds the maximum dimension for cable accommodation.

Upon completion of the processing in steps S11 to S38, the display processor 14 displays, on the display 40, the outer shape of the rack-mount apparatus and the layout plan of the units at this point, as illustrated in FIGs. 17 to 19. In the present embodiment, the display processor 14 displays, on the display 40, information for prompting the user to make a final check on the final outer-shape plan and layout plan displayed on the display 40 (in step S39).

When the user is to make a layout change or the like to the units in response to the displayed final-check prompt (YES route from step S40), the user operates the input device 30 to specify the unit or the like to which the layout change is to be made. As a result, the distance between the given origin and the unit or the like (e.g., the lower left position of the unit) to which the layout change is to be made. This arrangement allows the user to change the placement position of the unit or the like to which the layout change is to be made to an optimum position, through modification while referring to the displayed distance (in step S41). In this case, by referring to the unit-information table 24 to re-specify the option candidate via the input device 30, the user may change the unit or the like to which a layout change is to be made to a different type.

When the user is not to make a layout change or the like to the units (NO route from step S40) or when the change processing in step S41 is completed, the final outer shape and layout plan of the rack-mount apparatus are displayed on the display 40 and/or printed out from a printer, as needed (in step S42). Through the above-described processing, the outer shape and layout plan of the rack-mount apparatus which consider the external connection cable are completed. In this case, when the outer shape and the layout plan are displayed on the screen of the display 40 or are printed out from the printer, the height dimension, the width dimension, the depth dimension, and an approximate weight of the rack-mount apparatus are numerically displayed or represented. The approximate weight is determined based on 20 kg per 1U. When the outer shape and the layout plan are displayed on the screen of the display 40 or are printed out from the printer, the component installation available area (available space) in the rack-mount apparatus is also displayed or represented using a default thickness of 1 mm (variable) for metal plates used for the apparatus housing.

Thereafter, a CPU (which is a heat-generating component) and so on are placed on the system board on the basis of a final layout plan as described above, cooling simulation is performed, and detailed apparatus design and so on are executed.

(3) Advantages of Design Apparatus

As described above, according to the design apparatus 1 of the present embodiment, simply inputting minimum specification information via the input device 30 through a dialog format or the like makes it possible to determine the outer dimension of a to-be-designed apparatus and the placement position of units to be installed. Thus, even unskillful personnel, for example, personnel who do not have installation structure expertise and special skills, such as design skills and CAD operation skills, may easily create a highly feasible outer-shape plan of the to-be-designed apparatus and a highly feasible layout plan of the units to be installed.

That is, in the past, an apparatus-specification department and an installation structure department needed to interact with each other dozens of times during the development, planning, and studying in order to determine the feasibility of the apparatus specifications studied at the apparatus-specification department. In contrast, in the present embodiment, the use of the design apparatus 1 allows the apparatus-specification department to solely and easily create a highly feasible outer-shape plan of a to-be-designed apparatus and a highly feasible layout plan of units to be installed,

Thus, a highly feasible outer-shape plan of the to-be-designed apparatus and a highly feasible layout plan of units to be installed are created without any interaction between the apparatus specification department and the installation structure department. As a result, the period of time and human work hours taken for developing the to-be-designed apparatus are considerably reduced and the design quality of the to-be-designed apparatus is significantly improved.

According to the design apparatus 1 of the present embodiment, since the outer shape of the to-be-designed apparatus and the layout plan of the units to be installed are lastly visualized on the display 40, detailed design and cooling evaluation may also be promptly performed based on the visualized image.

In particular, the apparatus specification department obtains the following specific advantages. Since the interaction between the apparatus specification department and the installation structure department may be minimized, the apparatus specification department may solely carry out early study for determining the apparatus specifications. Thus, significant speed up of the development may be expected. For example, highly feasible study plans (an outer-shape plan and a layout plan) may be created with about one-fifth or less of the present design work hours. Hitherto, the apparatus specification department and the installation structure department have typically interacted with each other dozens of times for each of processes 1 to 7 of the total of eight processes. According to the design apparatus 1 of the present embodiment, however, a highly feasible study plan may be created without any interaction between the departments or with several interactions therebetween.

In particular, the installation structure department obtains the following specific advantages. That is, since the apparatus specifications (the outer-shape plan and the layout plan) presented by the apparatus specification department become independent of the skills of designers, a certain level of design quality may be constantly maintained. In conjunction with an improvement in the basic design quality, rework during detailed design is excluded or reduced, so that the installation structure department may focus on only the detailed design. In addition, since the installation structure department may study the detailed design on the basis of a feasible plan, i.e., a highly feasible study plan, in the early stage of the study, problem extraction is facilitated and a high level of detailed design may be achieved after obtaining the plan.

(4) Modifications

Although a preferred embodiment of the present invention has been described above in detail, the present invention is not limited to the particular embodiment and various modifications and changes may be made thereto without departing from the spirit and scope of the present invention.

Although a case in which the to-be-designed apparatus is a rack-mount apparatus that is to be mounted in a rack according to a given standard that has a size designated by numeric values in a height unit defined by the given standard has been described in the above embodiment, the present technology is not limited thereto.

The functions of the first processor 11, the second processor 12, the third processor 13, and the display processor 14 may be entirely or partially realized by a computer (which may be a CPU, an information processing apparatus, a terminal, or the like) executing a given application program (a design program).

The program is supplied in the form of a computer-readable recording medium, such as a flexible disk, a CD (such as a CD-ROM, CD-R, or CD-RW), a DVD (such as a DVD-ROM, DVD-RAM, DVD-R, DVD-RW, DVD+R, or DVD+RW), or a Blu-ray disc. In this case, the computer reads the program from the recording medium, transfers the read program to an internal storage device or an external storage device, and stores it therein.

The term "computer" as used herein refers to a concept including hardware and an (OS) operating system, the hardware operating under the control of the OS. When the hardware is operable on an application program without use of the OS, the hardware itself corresponds to the computer. The hardware has at least a microprocessor, such as a CPU, and reader that reads the computer program recorded on the recording medium. The design program described above includes program code for causing a computer as described above to realize the functions of the first processor 11, the second processor 12, the third processor 13, and the display processor 14. At least one of the functions may be realized by the OS, instead of the application program.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A design apparatus comprising:
a storage that stores a plurality of dimension rules defining outer dimensions of the to-be-designed apparatus, a plurality of placement rules of units to be installed in the to-be-designed apparatus with respect to respective types of the units, and a plurality of unit candidates installable in the to-be-designed apparatus with respect to the types of the units;
a first processor that determines the outer dimensions of the to-be-designed apparatus on a basis of the specification information input via an input device and the dimension rules stored by the storage; and
a second processor that determines, when one of the unit candidates stored by the storage is selected as a unit to be installed in the to-be-designed apparatus in accordance with the specification information input via the input device, a placement position of the selected unit in the to-be-designed apparatus having the outer dimensions determined by the first processor on a basis of the placement rules stored by the storage and associated with a type of the selected unit.

2. The design apparatus according to claim 1, further comprising:
a display; and
a display processor that controls a display state of the display,
wherein, on a basis of results of the processing performed by the first processor and the second processor and information stored by the storage, the display processor creates an image indicating an outer shape of the to-be-designed apparatus and an installation layout state of the unit in the to-be-designed apparatus and displays the created image on the display.

3. The design apparatus according to claim 1, further comprising a third processor that checks correspondence between a standard of the to-be-designed apparatus and the specification information input via the input device, a result of the processing performed by the first processor, or the second processor,
wherein the display processor displays, on the display, a result of the checking performed by the third processor.

4. The design apparatus according to claim 3, wherein, when the result of the checking performed by the third processor indicates a lack of correspondence, the display processor displays an incompatible portion in the image in an enhanced manner.

5. The design apparatus according to claims 2, wherein, upon completion of the processing performed by the first processor and the second processor, the display processor displays, on the display, information for prompting an operator to make a final check on the result of the processing performed by the first processor and the second processor,

6. The design apparatus according to claim 2, wherein the to-be-designed apparatus is placed in a rack according to a given standard and has a size specified by a numeric value of a height unit defined by the given standard; and
the first processor determines a height dimension of the to-be-designed apparatus on a basis of the height-unit numeric value and the dimension rules stored by the storage, the height-unit numeric value being input to the first processor via the input device as the specification information.

7. The design apparatus according to claim 6, wherein the first processor determines a width dimension of the to-be-designed apparatus on a basis of information that specifies installation or nan-installation of a slide rail for removable mounting the to-be-designed apparatus to the rack and the dimension rules stored by the storage, the information being input to the first processor via the input device as the specification information.

8. The design apparatus according to claim 7, wherein the information specifies non-installation of the slide rail, the first processor modifies the height dimension of the to-be-designed apparatus on a basis of a thickness of a shelf plate on which the to-be-designed apparatus is to be placed.

9. The design apparatus according to claim 7, wherein, when the first processor temporarily sets a depth dimension of the to-be-designed apparatus and the second processor completes the determination of the placement position of the unit to be installed, the first processor determines the depth dimension of the to-be-designed apparatus on a basis of a minimum bend radius value of a cable at a back of the to-be-designed apparatus and the dimension rules stored by the storage, the minimum bend radius value being input via the input device as the specification information,

10. The design apparatus according to claim 7, wherein, when the first processor temporarily sets a depth dimension of the to-be-designed apparatus and the second processor completes the determination of the placement position of the unit to be installed, the first processor reads, from the storage, a minimum bend radius value corresponding to a type of a cable at a back of the to-be-designed apparatus and determines the depth dimension of the to-be-designed apparatus on a basis of the read minimum bend radius value and the dimension rules stored by the storage, the type of the cable being input via the input device as the specification information.

11. The design apparatus according to claim 7, wherein, before a depth dimension of the to-be-designed apparatus is determined, the display processor displays, in the image, a distance between a back surface of the to-be-designed apparatus and an inner side of a back door of the rack as a maximum dimension for accommodating the cable.

12. The design apparatus according to claim 7, wherein the type of the unit to be installed includes at least one a power supply, a cooling fan, a built-in storage device, a medium driver, a system board, and an input/output card.

13. The design apparatus according to claim 1, wherein the first processor determines a height dimension and a width dimension of the to-be-designed apparatus and temporarily sets a depth dimension of the to-be-designed apparatus, the second processor determines the placement positions of the units in an order of a power supply, a cooling fan, a built-in storage device, a medium driver, a system board, and an input/output card, and then the first processor determines the depth dimension of the to-be-designed apparatus.

14. A computer-readable, non-transitory medium in which a design program for a computer for designing a to-be-designed apparatus is recorded, the computer being connected to an input device for inputting specification information of the to-be-designed apparatus and a storage that stores dimension rules defining outer dimensions of the to-be-designed apparatus, stores placement rules of units to be installed in the to-be-designed apparatus with respect to respective types of the units, and stores option candidates installable in the to-be-designed apparatus with respect to the types of the units, the design program causing the computer to execute:
determining, by the computer, the outer dimensions of the to-be-designed apparatus, on a basis of the specification information input via the input device and the dimension rules stored by the storage; and
determining, when one of the option candidates stored by the storage is selected as a unit to be installed in the to-be-designed apparatus in accordance with the specification information input via the input device, a placement position of the selected unit in the to-be-designed apparatus having the determined outer dimensions, on a basis of the placement rules stored by the storage and associated with a type of the selected unit.

15. A design method for causing a computer to design a to-be-designed apparatus, the computer being connected to an input device for inputting specification information of the to-be-designed apparatus and a storage that stores dimension rules defining outer dimensions of the to-be-designed apparatus, stores placement rules of units to be installed in the to-be-designed apparatus with respect to respective types of the units, and stores option candidates installable in the to-be-designed apparatus with respect to the types of the units, the design method comprising:
determining, by the computer, the outer dimensions of the to-be-designed apparatus, on a basis of the specification information input via the input device and the dimension rules stored by the storage; and
determining, when one of the option candidates stored by the storage is selected as a unit to be installed in the to-be-designed apparatus in accordance with the specification information input via the input device, a placement position of the selected unit in the to-be-designed apparatus having the determined outer dimensions, on a basis of the placement rules stored by the storage and associated with a type of the selected unit.
